# EUROPÄISCHE PATENTSCHRIFT

(11) **EP 2 458 464 B1**
(45) Veröffentlichungstag und Bekanntmachung des Hinweises auf die Patenterteilung: **29.10.2014**
(21) Anmeldenummer: 10193208.5
(22) Anmeldetag: 30.11.2010
(51) Int. Cl.: G05B 19/409

(54) **Verfahren zum Visualisieren und Bedienen eines zu steuernden technischen Prozesses**
Method for visualising and operating a controllable technical process
Procédé de visualisation et de commande d'un processus technique de commande

(43) Veröffentlichungstag der Anmeldung: 30.05.2012
(73) Patentinhaber: Siemens Aktiengesellschaft, 80333 München (DE)
(72) Erfinder: Rhein, Bernd, 76870, Kandel (DE)

(56) Entgegenhaltungen:
- EP-A1- 0 511 941
- EP-A1- 0 543 760
- US-B1- 7 720 552

## Beschreibung

Die Erfindung betrifft ein Verfahren zum Visualisieren und Bedienen eines zu steuernden technischen Prozesses mittels eines Bedien- und Beobachtungsgerätes gemäß dem Oberbegriff des Anspruchs 1. Darüber hinaus betrifft die Erfindung ein Bedien- und Beobachtungsgerät, welches zur Durchführung des Verfahrens geeignet ist.

Ein Verfahren zum Visualisieren und Bedienen eines zu steuernden technischen Prozesses mittels eines Bedien- und Beobachtungsgerätes ist aus dem Siemens-Katalog "ST 80 / ST PC", Ausgabe 2010, Kapitel 2 und 4 bekannt. Das Bedien- und Beobachtungsgerät ist über geeignete Busverbindungen mit Automatisierungskomponenten, z. B. Komponenten in Form von speicherprogrammierbaren Steuerungen, dezentralen Peripheriegeräten und/oder Sensoren und/oder Aktoren, verbunden, wobei diese Automatisierungskomponenten zusammen mit geeigneter Software zur Steuerung eines technischen Prozesses vorgesehen sind. Dabei werden unter dem Begriff "technischer Prozess" sowohl verfahrenstechnische Prozesse als auch Fertigungsabläufe sowie Maschinen und/oder Anlagen verstanden. Das Bedien- und Beobachtungsgerät ist zum Bedienen und Beobachten eines derartigen Prozesses vorgesehen. Beispielsweise kann der Wert eines Prozessparameters in Form einer Temperatur geändert werden, indem ein Anwender bzw. Operator ein auf einer Anzeigeeinheit des Bedien- und Beobachtungsgerätes dargestelltes grafisches Bedienobjekt in Form eines Temperaturschiebers mit einem Bedienelement in Form einer Maus anwählt und diesen Schieber von einer aktuellen Position, welche eine aktuelle Soll-Temperatur repräsentiert, in eine andere Position verschiebt, die eine neue gewünschte Soll-Temperatur darstellt bzw. verkörpert. Aufgrund dieser neu eingestellten Temperatur ändern die Automatisierungskomponenten z. B. die Energiezufuhr eines Heizkessels so lange, bis sich die neue gewünschte Soll-Temperatur im Heizkessel einstellt.

In komplexen technischen Anlagen, insbesondere in Anlagen der chemischen Industrie, sind gewöhnlich viele Parametereinstellungen erforderlich, wobei häufig die Parameter voneinander abhängig sind. Beispielsweise sind die Eigenschaft und die Konsistenz einer zu erzeugenden chemischen Substanz sowohl von der Reihenfolge der Beimischung der unterschiedlichen Rohstoffe, der Zeitdauer eines Rührvorgangs, der Geschwindigkeit des Rührwerks, der Temperatur und nicht zuletzt von dem Druck im Reaktionsgefäß abhängig. Für jede Parametereinstellung ist daher ein geeignetes visualisiertes Bedienobjekt erforderlich, wobei sich gewöhnlich die Änderung eines Parameterwertes auf einen anderen bereits eingestellten Parameterwert auswirkt, wodurch dieser nochmals eingestellt werden muss, um die gewünschte Eigenschaft und Konsistenz der chemischen Substanz zu erzielen.

Ein Verfahren gemäß dem Oberbegriff des Anspruchs 1 sowie ein Bedien- und Beobachtungsgerät gemäß dem Oberbegriff des Anspruchs 2 ist aus der EP 0 511 941 A1 bekannt.

Der Erfindung liegt die Aufgabe zugrunde, ein Verfahren der eingangs genannten Art anzugeben, welches Parametereinstellungen erleichtert. Darüber hinaus ist ein Bedien- und Beobachtungsgerät zu schaffen, welches zur Durchführung des Verfahrens geeignet ist.

Diese Aufgabe wird im Hinblick auf das Verfahren durch die im kennzeichnenden Teil des Anspruchs 1, bezüglich des Bedien- und Beobachtungsgerätes durch die im kennzeichnenden Teil des Anspruchs 2 angegebenen Maßnahmen gelöst.

Vorteilhaft ist, dass lediglich ein visualisiertes Bedienobjekt für mehrere Parametereinstellungen erforderlich ist, wobei vorgesehen ist, mittels des Bedienobjekts die Einstellung der abhängigen Prozessparameter auf zulässige Wertekombinationen zu beschränken; auf eine Vielzahl von Bedienobjekten, welche getrennt voneinander für jeweils eine Parametereinstellung vorgesehen sind, kann verzichtet werden.

Dadurch werden insbesondere Fehleinstellungen vermieden, die zu Prozessstörungen führen könnten. Eine derartige Restriktion ist in dem Bedien- und Beobachtungsgerät hinterlegt und beispielsweise in Form einer Tabelle mit zulässigen Wertekombinationen der abhängigen Prozessparameter, einer Formel oder einer sonstigen geeigneten Regel zur Formulierung bzw. Beschreibung der Parameterabhängigkeiten verwirklicht.

Die Erfindung geht von der Idee aus, anstatt einer "eindimensionalen" eine "mehrdimensionale" Bedienung vorzusehen, was bedeutet, dass zu einem Zeitpunkt nicht nur der Wert eines Parameters sondern die Werte einer Schar von Parametern gleichzeitig eingestellt bzw. geändert werden können. Als grafisches Bedienobjekt ist z. B. ein mit Koordinaten versehener Quader mit einer darin angeordneten Kugel vorgesehen, welche mit einem Bedienelement in Form einer Maus und einer Tastatur in diesem Quader verschoben bzw. bewegt werden kann. Auf eine Maus und eine Tastatur kann selbstverständlich verzichtet werden, falls die Anzeigeeinheit des Bedien- und Beobachtungsgerätes als so genannter Touch-Screen ausgebildet ist. Jede der drei Raumkoordinaten repräsentiert einen Prozessparameter, z. B. einen Parameter in Form einer Temperatur, eines Drucks oder einer Durchflussmenge, wobei die Position der Kugel die Werte dieser Prozessparameter anzeigt. Die Kugel wird z. B. mittels einer Kombination einer Maus- und einer Tastaturbedienung bewegt, indem die Kugel zunächst angewählt und schließlich gleichzeitig die Maus bewegt wird, das Maus-Scrollrad gedreht und bestimmte Tasten der Tastatur gedrückt werden.

Für den Fall, dass mehr als drei Prozessparameter gleichzeitig eingestellt werden sollen, können weitere Modifikationen an dem grafischen Bedienobjekt berücksichtigt werden. Beispielsweise können der horizontalen und vertikalen Drehung der Kugel, der Farbe und/oder der Transparenz und/oder dem Schattenwinkel der Kugel sowie der Verformung der Kugel zu einer abflachenden Ellipse hin oder der Geschwindigkeit der Kugelbewegung jeweils ein Parameter zugeordnet werden, wodurch sieben weitere Parameter abgebildet werden können. Die "Kugel-Modifikationen" werden z. B. dadurch bewirkt, indem ein Anwender oder ein Operator die Kugel zunächst anwählt und dann zur selben Zeit das Mausrad dreht und Tasten, z. B. die Tasten "Shift", "Ctrl", "Alt", ..., betätigt.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figur 1: auf einem Bedien- und Beobachtungsgerät dargestellte Bildobjekte und
- Figur 2 und 3: mehrdimensionale Bedienobjekte eines Bedien- und Beobachtungsgerätes.

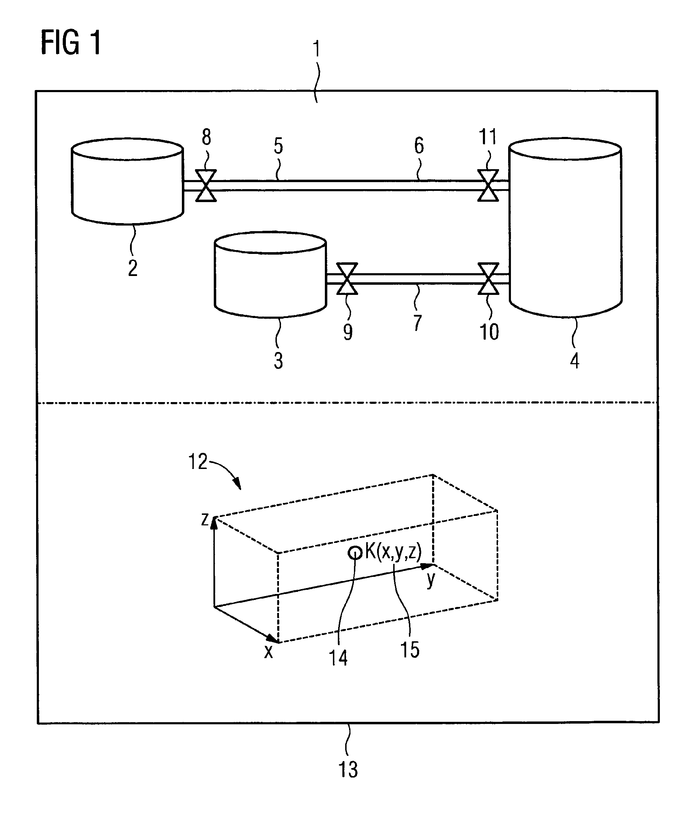

In Figur 1 ist mit 1 ein dargestelltes, mehrere Bildobjekte 2 bis 11 aufweisendes Prozessbild bezeichnet, welches eine zu steuernde Produktionsanlage repräsentiert und zusammen mit einem weiteren Bildobjekt in Form eines Bedienobjekts 12 auf einer Anzeigeeinheit 13 eines Bedien- und Beobachtungsgerätes dargestellt ist. Das Bedien- und Beobachtungsgerät ist Bestandteil eines Prozessleitsystems, welches weitere Bestandteile wie mindestens ein Engineering-System, unterschiedliche Automatisierungsgeräte, ferner Aktoren und Sensoren sowie weitere zur Steuerung der Produktionsanlage erforderliche Automatisierungskomponenten umfasst, wobei die Teile über einen Bus miteinander verbunden sind.

Das mehrere Bildobjekte 2 bis 11 umfassende Prozessbild 1 sowie das visualisierte Bedienobjekt 12 erstellt ein Anwender im Rahmen einer Projektierungsphase mittels des Engineering-Systems. Im vorliegenden Beispiel repräsentieren die Bildobjekte 2 und 3 jeweils einen Behälter, die mit einem ersten und einem zweiten Ausgangsstoff befüllt sind, und das Bild objekt 4 einen Reaktor, welcher zur Herstellung eines Endproduktes die ihm zugeführten ersten und zweiten Ausgangsstoffe mischt und erhitzt. Die weiteren Bildobjekte 5, 6, 7 repräsentieren Rohrleitungen, welche die Behälter mit dem Reaktor verbinden, wobei in Form von Bildobjekten 8, 9, 10, 11 angezeigte Ventile zum Öffnen bzw. Schließen der Rohrleitungen vorgesehen sind.

Es wird im Folgenden angenommen, dass der erste und zweite Ausgangsstoff in einem Mischungsverhältnis von 2:1 dem Reaktor - repräsentiert durch das Bildobjekt 4 - zugeführt werden muss. Ferner wird angenommen, dass je nach Füllstand des Reaktors dieser unterschiedlich erhitzt werden muss, um eine bestimmte Eigenschaft des Endprodukts zu erzielen.

In diesem Fall weist ein Projektierer im Rahmen einer Projektierungsphase beispielsweise der Koordinate X des Bedienobjekts 12 die Durchflussmenge des ersten Ausgangsstoffes, der Koordinate Y die Durchflussmenge des zweiten Ausgangsstoffes und der Koordinate Z die Temperatur des Reaktors als Parameter zu. Eine Projektierungs-Software erzeugt aus den Projektierungsdaten einen Treiberbaustein und hinterlegt diesen in dem Bedien- und Beobachtungsgerät, wobei in diesem Treiberbaustein die Abhängigkeiten der Parameter abgespeichert sind. Darüber hinaus ist der Treiber dazu ausgebildet, Eingaben eines Bedieners bzw. Operators während der Prozesssteuerung zu erfassen, auszuwerten und gemäß den Auswerteergebnissen den entsprechenden Automatisierungskomponenten geeignete Signale zu übermitteln. Aufgrund dieser Signale werden die Ventile - repräsentiert durch die Bildobjekte 8 bis 11 - derart angesteuert, dass gemäß der Bedieneingabe diese geschlossen oder geöffnet werden und/oder dass dem Reaktor - repräsentiert durch das Bildobjekt 4 - Energie zum Aufheizen zugeführt wird.

Für den Fall, dass im vorliegenden Beispiel der Bediener mittels einer Maus eine Kugel 14 des Bedienobjekts 12 in der X-Y-Ebene innerhalb des von den X-, Y-, Z-Koordinaten aufgespannten Quaders verschiebt, bewirkt dies eine gleichzeitige Änderung der Werte der Durchflussmengen des ersten und zweiten Ausgangsstoffes. Das bedeutet, dass die Ventile entsprechend angesteuert werden, um die entsprechende Menge der Ausgangsstoffe zum Reaktor fließen zu lassen. Wird dagegen die Kugel 14 auch in Z-Richtung verschoben, wird neben den Durchflussmengen der Ausgangsstoffe gleichzeitig der Temperaturwert geändert, wodurch eine geeignete Energiezufuhr für den Reaktor eingeleitet wird. Um dem Bediener einen besseren Überblick über die aktuell eingestellten Parameterwerte zu ermöglichen, werden diese als x-, y-, z-Koordinatenwerte 15 zusätzlich zur Kugel 14 angezeigt.

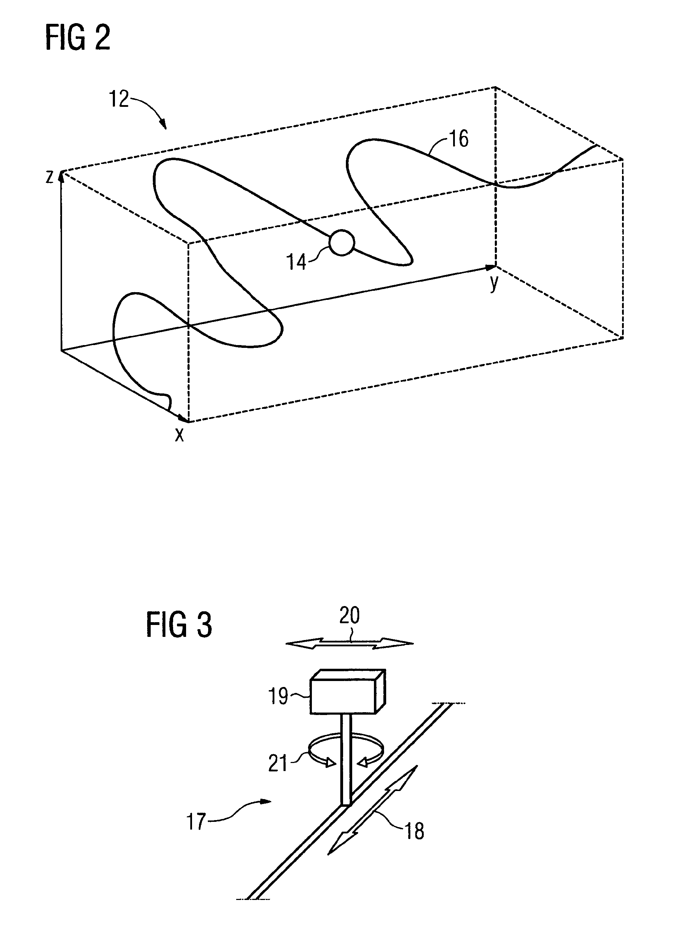

Um zu gewährleisten, dass der Bediener mittels eines visualisierten Bedienobjekts und eines Bedienelementes nur zulässige Parameterwerte-Kombinationen einstellen kann, ist vorgesehen, den Freiheitsgrad der Bewegung bzw. Verschiebung der Kugel zu beschränken. In diesem Zusammenhang wird auf Figur 2 verwiesen, in welcher das in Figur 1 gezeigte Bedienobjekt 12 zusätzlich mit einer Ortskurve 16 dargestellt ist. Der Bediener kann die Parameterwerte im Hinblick auf die Durchflussmengen des ersten und zweiten Ausgangsstoffes und der Reaktortemperatur nur entlang dieses vorgeschriebenen Kurvenverlaufs ändern, was eine Beschränkung auf zulässige Koordinatenkombinationen darstellt, welche den zulässigen Betriebsparametern der Anlage entsprechen.

Im Unterschied zu dem in Form eines Quaders mit einer Kugel 14 ausgebildeten Bedienobjekt 12 ist ein weiteres Bildobjekt 17 als multidimensionaler Schieberegler ausgebildet (Figur 3). Mittels einer Bewegung des Schiebereglers entlang einer ersten Achse 18 eines zweiachsigen Koordinatensystems lässt sich genau ein Wert eines Prozessparameters verstellen bzw. verändern. Ferner kann die Breite eines Bedienknopfes 19 des Schiebereglers 17 entlang einer zweiten Achse 20 verändert und darüber hinaus mittels einer Drehbewegung 21 des Bedienknopfes 19 verdreht werden. Dadurch können zwei weitere Prozessparameter gleichzeitig verändert bzw. eingestellt werden.

Weitere Parametereinstellungen mittels des Schiebereglers 17 werden dadurch ermöglicht, dass der Farbe der Vorderseite und der Farbe der Oberseite des Schiebereglers 17 sowie der Neigung des Bedienknopfes zur Seite jeweils ein Parameter zugewiesen wird. Hierdurch ergibt sich eine Dimension von sechs Parametern, die mit einer einzigen Bedienung in zueinander konformer Weise gleichzeitig verstellt bzw. geändert werden.

## Patentansprüche

1. Verfahren zum Visualisieren und Bedienen eines zu steuernden technischen Prozesses mittels eines Bedien- und Beobachtungsgerätes, welcher durch ein visualisiertes Prozessbild (1) repräsentiert wird, wobei mittels eines visualisierten Bedienobjekts (12, 17) und eines Bedienelementes zwei voneinander abhängige Prozessparameter eingestellt werden, **dadurch gekennzeichnet, dass** mittels des visualisierten Bedienobjektes (12, 17) und des Bedienelementes gleichzeitig die zwei und ein von den zwei Prozessparametern abhängiger weiterer Prozessparameter eingestellt werden, und dass mittels des Bedienobjekts (12, 17) die Einstellung der abhängigen Prozessparameter auf zulässige Wertekombinationen beschränkt wird, wobei Parameterwerte nur entlang einer Ortskurve (16) des visualisierten Bedienobjektes (12, 17) eingestellt werden können.

2. Bedien- und Beobachtungsgerät zum Visualisieren und Bedienen eines zu steuernden technischen Prozesses, wobei mindestens ein visualisiertes Prozessbild (1) den Prozess repräsentiert und ein visualisiertes Bedienobjekt (12, 17) und ein Bedienelement zum Einstellen von zwei voneinander abhängigen Prozessparametern vorgesehen sind, **dadurch gekennzeichnet, dass** das visualisierte Bedienobjekt (12, 17) und das Bedienelement ausgebildet sind, gleichzeitig die zwei Prozessparameter und einen von den zwei Prozessparametern abhängigen weiteren Prozessparameter einzustellen, und die Einstellung der abhängigen Prozessparameter auf zulässige Wertekombinationen zu beschränken, wobei Parameterwerte nur entlang einer Ortskurve (16) des visualisierten Bedienobjektes (12, 17) eingestellt werden können.

## Claims

1. Method for visualizing and operating a technical process to be controlled by means of an operating and monitoring unit which is represented by a visualized process image (1), two mutually dependent process parameters being set by means of a visualized operating object (12, 17) and an operating element, **characterized in that** the two process parameters and a further process parameter dependent on the two process parameters are set by means of the visualized operating object (12, 17) and the operating element simultaneously, and **in that** the setting of the dependent process parameters is limited to permissible value combinations by means of the operating object (12, 17), it being possible to set the parameter values only along a locus curve (16) of the visualized operating object (12, 17).

2. Operating and monitoring unit for visualizing and operating a technical process to be controlled, at least one visualized process image (1) representing the process, and a visualized operating object (12, 17) and an operating element being provided for setting two mutually dependent process parameters, **characterized in that** the visualized operating object (12, 17) and the operating element are designed to simultaneously set the two process parameters and a further process parameter dependent on the two process parameters, and to limit the setting of the dependent process parameters to permissible value combinations, it being possible to set the parameter values only along a locus curve (16) of the visualized operating object (12, 17).

## Revendications

1. Procédé de visualisation et de commande d'un processus technique à commander au moyen d'un appareil de commande et d'observation, qui est représenté par une image (1) visualisée de processus, dans lequel au moyen d'un objet ( 12, 17 ) de commande visualisé et d'un élément de commande, on règle deux paramètres de processus qui dépendent l'un de l'autre, **caractérisé en ce qu'**au moyen de l'objet ( 12, 17 ) de commande visualisé et de l'élément de commande, on règle en même temps les deux paramètres de processus et un autre paramètre de processus dépendant des deux paramètres de processus, et **en ce qu'**au moyen de l'objet ( 12, 17 ) de commande, on limite le réglage des paramètres de processus dépendants à des combinaisons de valeurs admissibles, des valeurs de paramètre ne pouvant être réglées que le long d'un lieu ( 16 ) géométrique de l'objet ( 12, 17 ) de commande visualisé.

2. Appareil de commande et d'observation pour la visualisation et la commande d'un processus technique à commander, dans lequel au moins une image ( 1 ) visualisée de processus représente le processus et un objet ( 12, 17 ) de commande visualisé et un élément de commande sont prévus pour le réglage de deux paramètres de processus dépendants l'un de l'autre, caractérisé en que ce que l'objet ( 12, 17 ) de commande visualisé et l'élément de commande sont constitués pour régler en même temps les deux paramètres de processus et un autre paramètre de processus dépendant des deux paramètres de processus et pour limiter le réglage des paramètres de processus dépendants à des combinaisons de valeurs admissibles, des valeurs de paramètre ne pouvant être réglées que le long d'un lieu ( 16 ) géométrique de l'objet ( 12, 17 ) de commande visualisé.
